# EUROPÄISCHE PATENTSCHRIFT

(11) **EP 3 663 769 B1**
(45) Veröffentlichungstag und Bekanntmachung des Hinweises auf die Patenterteilung: **10.04.2024**
(21) Anmeldenummer: 19214528.2
(22) Anmeldetag: 09.12.2019
(51) Int. Cl.: G01P 3/66, B61L 25/02, B61L 3/12, G08G 1/052

(54) **VORRICHTUNG ZUR BESTIMMUNG DER GESCHWINDIGKEIT VON FAHRZEUGEN**
DEVICE FOR DETERMINING THE SPEED OF VEHICLES
DISPOSITIF DE DÉTERMINATION LA VITESSE DE VÉHICULES

(30) Priorität: 09.12.2018 DE 202018107011 U
(43) Veröffentlichungstag der Anmeldung: 10.06.2020
(73) Patentinhaber: PhySens Rail GmbH, 38104 Braunschweig (DE)
(72) Erfinder: Heinisch, Dr. Philip, 29525 Uelzen (DE)
(74) Vertreter: Gramm, Lins & Partner Patent- und Rechtsanwälte PartGmbB

(56) Entgegenhaltungen:
- EP-A1- 2 851 262
- DE-A1-102012 200 087
- GB-A- 2 094 981
- JP-A- H0 682 466
- US-A1- 2006 015 288

## Beschreibung

Die Erfindung betrifft eine Vorrichtung zur berührungslosen Bestimmung eines schienengeführten Fahrzeugs.

Messvorrichtungen zur berührungslosen Bestimmung der Geschwindigkeit von Fahrzeugen über Grund basieren üblicherweise zumeist auf der Erfassung der Radumdrehung, Radarmessungen oder Satellitennavigationssystemen. Auch Beschleunigungssensoren können durch Zeitintegration zur Bestimmung der Geschwindigkeit herangezogen werden. Eine weitere Möglichkeit besteht in der Verwendung von Wirbelstromsensoren. Im Bahnverkehr ist eine Verwendung von Balisen oder anderen gleisbasierten Markern möglich. Darüber hinaus sind optische Systeme zur Geschwindigkeitsmessung technisch möglich. Einige dieser Systeme können auch zur automatischen Detektion von Signalen, Schildern oder Baken eingesetzt werden, um Streckensignale an das Fahrzeug zu übermitteln.

Klassische odometrische Verfahren, wie die Messung der Radumdrehung haben den Nachteil, Gleit- und Schlupfeffekten zu unterliegen. Zusätzlich sind hier relativ viele Einzelkomponenten notwendig, weil die Elektronik zur Auswertung zumeist nicht zusammen mit dem Sensor in der Laufrolle oder dem Antriebsrad bzw. der Aufhängung integriert werden kann. Durch Gleit- und Schlupfeffekte ist insbesondere die Detektion von Schwankungen des Fahrzeugs beim Anhalten bzw. die Detektion des Stillstands problematisch. Verfahrensbedingt liefert klassische Odometrie ungenaue Ergebnisse, wenn die Räder aktiv gebremst werden. Im Extremfall kann eine solche Sensorik bei voll blockierten Rädern Stillstand melden, obwohl das Fahrzeug rutscht. Dies gilt sowohl für geführte als auch für urgeführte Fahrzeuge.

Der Einsatz von Radarmessungen auf Basis des Dopplereffekts unterliegt zwar keinen Gleit- und Schlupfeffekten, benötigt dafür aber technisch anspruchsvolle Sende- und Empfangstechnik kombiniert mit echtzeitfähiger Mikro- oder Signalprozessortechnik. Dieses System besteht daher aus einer Vielzahl an komplexen Komponenten mit entsprechendem Ausfallrisiko. Darüber hinaus ist die Komplexität ein erheblicher Kostenfaktor. Der Einsatz von hochfrequenten Funksignalen kann außerdem andere Systeme stören. Die Form des reflektierten Signals hängt von den Reflexionseigenschaften des Untergrunds ab, dies kann z.B. bei der Überfahrt von nassen oder verschmutzen Flächen oder bei Brücken und ähnlichen Änderungen in der Beschaffenheit des Untergrunds zu Fehlern führen. Ein solches System kann daher bei nicht standardisiertem Unterbau, z.B. bei grenzüberschreitendem Verkehr sowie beim internationalen Einsatz zu Problemen führen.

Satellitennavigationssysteme (z.B. GPS, Galileo) können sehr genaue Informationen über Position und Geschwindigkeit liefern. Da jedoch die Satellitensignale ungestört empfangen werden müssen, ist der Einsatz in Bauwerken (z.B. Tunnel, Hallen) nicht ohne weiteres möglich. Zusätzlich können die Signale aktiv gestört oder verfälscht werden, zum einen durch Interferenz mit anderen Anlagen oder bewusst durch Störsender oder externe Angreifer. Daher scheiden solche Systeme für sicherheitskritische Anwendungen als primäre Messmethode aus.

Beschleunigungssensoren können entweder allein oder in Kombination mit anderen Sensoren eingesetzt werden. Dabei wird die gemessene Beschleunigung des Fahrzeugs über die Zeit integriert um die Geschwindigkeit zu erhalten. Bei diesen Messmethoden kann es zu Problemen bei konstanter Geschwindigkeit oder geringen Beschleunigungen kommen, in diesen Fällen kann das Nutzsignal im Bereich des Rauschens der Sensoren liegen. Dadurch kommt es bei Integration bzw. Aufsummieren des Signals mit der Zeit beziehungsweise über die Zeit zu einer Verstärkung des Rauschfehlers und es ist keine zuverlässige Messung möglich.

Wirbelstromsensoren unterliegen zum einen gerade bei elektromagnetischem Antrieb elektrischen sowie magnetischen Einflüssen der Bordelektronik und führen zum anderen bei geringen Geschwindigkeiten oder wechselndem Untergrund zu Problemen. Zur Detektion der Bewegung muss es durch zeitliche Variation der magnetischen Eigenschaften der Umgebung zur Induktion im Sensor kommen. Dies erfordert allerdings einen ausreichend magnetischen Untergrund. Zusätzlich ist eine Mindestgeschwindigkeit nötig, damit die zeitliche Variation ausreichend ist. Wird diese Art der Messung lediglich zur Bestimmung der Umlaufgeschwindigkeit der Laufrollen bzw. Antriebswelle verwendet, treten die oben beschriebenen Probleme der Odometrie mit Gleit- bzw. Schlupfeffekten auf.

Optische Systeme haben den Nachteil, dass zur Erkennung von Veränderungen im Untergrund zur Bestimmung der Geschwindigkeit eine ausreichende Beleuchtung vorhanden sein muss und zusätzlich eine entsprechende Optik. Im Betrieb kann dies z.B. durch Verschmutzung der Einrichtung zu Problemen führen. Diese Probleme treten auch bei der Detektion von Signalen oder Schildern auf. Zusätzlich muss sichergestellt werden, dass diese Marker durch das optische System erkennbar sind. Damit sind diese Systeme potentiell auch gegenüber Wettereinflüssen, Vandalismus oder anderweitiger Beschädigung der Sensoren oder der Signaleinrichtungen anfällig.

Im Schienenverkehr ist der Einsatz von Barken - z.B. der Eurobalise - mittlerweile Standard. Diese Barken kommunizieren drahtlos bei Überfahrt mit dem Zug und senden z.B. Streckeninformationen. Da diese Balisen nicht ausreichend häufig installiert sind, ist eine Bestimmung der Geschwindigkeit anhand der Zeitdifferenz der Überfahrt nur begrenzt möglich. Außerdem sind diese Systeme zumeist offen im Gleisbett installiert und damit Umwelteinflüssen und potentieller mechanischer oder elektrischer Beschädigung ausgesetzt.

In der EP 2 851 262 A1 wird eine Antennenvorrichtung beschrieben, welche auf einem Fahrzeug, beispielsweise einem Schienenfahrzeug, angebracht werden kann, um Signale zu empfangen, welche von Sendern im Gleis ausgesandt werden. Damit kann die absolute Geschwindigkeit des Fahrzeugs gemessen werden. Dabei sind die Antennen in Fahrtrichtung in einem bekannten Abstand auf dem Fahrzeug montiert.

Die US 2006/0015 288 A1 beschreibt eine Sensoreinheit mit zwei Sensoren zur Messung einer Geschwindigkeit eines beweglichen Objektes. Wenn das Objekt einen Sensor passiert, wird ein Signal ausgelöst und aus dem Zeitunterschied der Signale der beiden Sensoren und der Distanz zwischen den beiden Sensoren kann die Geschwindigkeit des Objekts ermittelt werden.

Die DE 10 2012 200 087 A1 zeigt ein Verfahren zur Bestimmung der Geschwindigkeit eines beweglichen Objekts in dem ortsspezifische Parameter des natürlichen Erdmagnetfelds ausgewertet werden. Dazu können Referenzdaten an bestimmten Orten ermittelt werden, um die sich ändernde Bebauung in die Magnetsignatur aufzunehmen.

In der GB 2 0 94981 A wird eine Vorrichtung aus magnetischen Sensoren für ein fliegendes Objekt oder ein U-Boot beschrieben, welche das Magnetfeld, in dem sich das Objekt bewegt, also beispielsweise das Erdmagnetfeld, misst. Diese Messdaten werden in eine elektrische Form umgewandelt und per Computer korreliert, um die Geschwindigkeit des Objekts zu bestimmen.

Das Dokument JP H06 82466 a offenbart ein Sender-Empfänger-System, bei welchem ein Sender an einer Strecke platziert wird und ein Empfänger an einem bewegten Objekt befestigt ist. Der Empfänger korreliert die von dem Sender ausgesandten Signale und korreliert diese, um die Geschwindigkeit des beweglichen Objekts in Relation zu dem Sender zu errechnen.

Aufgabe der vorliegenden Erfindung ist es, eine Vorrichtung zur kontaktlosen Bestimmung einer Geschwindigkeit eines Fahrzeugs derart zu verbessern, dass die oben genannten Probleme vermieden oder reduziert werden.

Die Erfindung löst das Problem durch eine Vorrichtung mit den Merkmalen von Anspruch 1 und ein Verfahren mit den Merkmalen von Anspruch 14.

Die hier beschriebene Erfindung basiert somit auf dem Einsatz von, bevorzugterweise vernetzten, Magnetometern. Dabei wird das Magnetfeld des Untergrunds an beziehungsweise von mehreren Orten des Fahrzeugs unabhängig vermessen. Dazu werden die Magnetometer direkt am Fahrzeug verbaut. Technische oder bauliche Änderungen an der Fahrstrecke sind nicht nötig.

Zur Bestimmung der Geschwindigkeit werden die magnetischen Profile der einzelnen Magnetometer beziehungsweise Sensoren in Echtzeit miteinander verglichen. Im Folgenden werden die Magnetometer im Sinne der vorliegenden Erfindung auch als Sensoren bezeichnet. Durch eine zeitaufgelöste Messung ist es möglich zu bestimmen, zu welcher Zeit das raumfeste magnetische Profil des Untergrunds von welchem Sensor erfasst wurde. Zusammen mit der bekannten Geometrie (bzw. Abstand) der Sensoren am Fahrzeug lässt sich aus dem zeitlichen Unterschied (Phasenverschiebung) die Geschwindigkeit berechnen. Die Geschwindigkeit entspricht dabei dem Quotienten aus dem Abstand der Sensoren und der zeitlichen Verschiebung der gemessenen Profile.

Störeinflüsse z.B. durch stromführende Leiter können einfach unterdrückt werden, weil die von den jeweiligen Sensoren aufgenommene magnetische Störung nahezu zeitgleich (in-phase) bei allen Sensoren auftritt, während Veränderungen durch Bewegung zeitlich versetzt gemessen werden (außer-phase). Über diese Methode ist auch eine zuverlässige Stillstandserkennung möglich, weil in diesem Fall alle Sensoren ein praktisch identisches, räumlich festes aber zeitlich veränderliches Signal (hervorgerufen durch Variationen im Erdfeld oder z.B. stromdurchflossene Kabel) messen. Im einfachsten Falle kann dies bereits durch Bilden eines Differenzsignals zwischen zwei Messungen erkannt werden.

Die Unterscheidung zwischen In-phase und Außer-Phase-Anteil erfolgt durch Berechnung des Kreuzspektrums zwischen den Signalen erfolgen. Im Prinzip reicht bereits der Einsatz von zwei räumlich getrennten einachsigen Sensoren. Zur Verbesserung der Signalqualität können prinzipiell beliebig viele - auch mehrachsige - Sensoren am Fahrzeug angeordnet werden. Dadurch ist es möglich, detaillierte Informationen über die Anomalie zu gewinnen und die Messsicherheit zu erhöhen.

Zusätzlich ist auch eine Kombination mit Beschleunigungssensoren möglich, um Redundanz zu liefern oder eine Anpassung der automatischen Analyse der Magnetikmessungen abhängig von der Beschleunigung zu ermöglichen (z.B. maximale zeitliche Verschiebung der Kreuzkorrelation oder Kombination mit Kalman Filter). Auch eine Kombination mit klassischen odometrischen Verfahren ist möglich und besonders geeignet um z.B. während eines Bremsvorgangs weiterhin zuverlässige Informationen über die Geschwindigkeit zu liefern. Als Sensor können z.B. Saturationskern-Magnetometer (auch Fluxgate-Magnetometer oder Förster-Sonde genannt), Induktionsspulen (Fluxmeter oder Search-Coil Magnetometer) oder billigere Sensoren auf Basis des magnetoresistiven Effekts verwendet werden. Voraussetzung zur Bestimmung der Geschwindigkeit bis zum Stillstand (oder einem Schwanken des Fahrzeugs) ist lediglich, dass die verwendeten Sensoren empfindlich genug sind, das statische Magnetfeld des Untergrunds bzw. der Umgebung zu erfassen. Sollten die Sensoren bauartbedingt lediglich in der Lage sein, stärkere zeitliche Variationen im Magnetfeld zu messen, ist eine Messung bis zum Stillstand nicht unter allen Bedingungen gewährleistet. In diesem Fall kann z.B. eine Kombination mit Beschleunigungssensoren eingesetzt werden. Darüber hinaus sollten die Sensoren eine Abtastrate aufweisen, die abhängig von der maximalen Geschwindigkeit des Fahrzeugs ausreichend hoch ist, um den zeitlichen Unterschied beim Überfahren eines konstanten magnetischen Profils zwischen den Sensoren aufzulösen. Bei langsamen Fahrzeugen reicht hier eine Abtastrate von ca. 100 Hz, bei schnelleren Fahrzeugen wird eine Abtastung im Bereich einiger kHz nötig. Die genaue Ausführung ist somit sowohl vom Fahrweg als auch der gewünschten Maximalgeschwindigkeit abhängig.

Die Auswertungselektronik der Vorrichtung kann entweder direkt in die Sensoren integriert werden, in diesem Fall übertragen die Sensoren ihre Messwerte an alle anderen Sensoren und jeder Sensor berechnet daraus unabhängig die Geschwindigkeit bzw. weitere gewünschte Informationen. Die Ergebnisse müssen dann zentral gesammelt und verglichen werden. Dies bringt zusätzliche Redundanz, sollte ein Sensor ausfallen. Alternativ können die magnetischen Messwerte auch direkt zentral gesammelt, ausgewertet und ggf. gespeichert werden. Damit werden die eigentlichen Sensoren einfacher im Aufbau. Die Datenverbindung zwischen den Sensoren bzw. der Auswerteinheit kann dabei relativ einfach ausgeführt werden, weil lediglich Übertragungsraten im Bereich von einigen kBit/s bis weniger MBit/s nötig sind. Dies macht das System deutlich einfacher als z.B. Umdrehungssensoren, die potentiell hochfrequente Analogsignale liefern. Im Vergleich zu Radarsystemen ist der Stromverbrauch für magnetische Sensoren deutlich kleiner (abhängig von der Abtastrate typisch im Bereich von ca. 1 W), damit ist die Stromversorgung, selbst bei Verwendung mehrerer Sensoren, deutlich einfacher. Daher können einfache Kupfer-Signalkabel oder eine Kombination mit Lichtwellenleitern zum Anschluss verwendet werden, was zur Kosteneinsparung bei der Installation führt.

Das Magnetfeld des Untergrunds hängt nicht nur von der (genormten) Beschaffenheit der Fahrbahn bzw. der Gleise ab, sondern wird auch durch Verunreinigungen (z.B. abgefallene Fahrzeug- oder Schienenteile, Fremdkörper etc.) sowie Bausubstanz (z.B. Tunnel, Brücken etc.) bestimmt. Zusätzlich kann es zu Einflüssen durch stromdurchflossene Kabel, Oberleitungen und weitere Betriebstechnik kommen. Da die Vorrichtung das gemessene magnetische Profil verschiedener Sensoren entlang der Fahrtrichtung vergleicht, ist sie unabhängig von der genauen Beschaffenheit des Untergrunds. Im Prinzip ist daher vorab keine Information über den Untergrund (Gleisbeschaffenheit, Straßenaufbau etc.) nötig. Selbst die natürlichen magnetischen Fluktuationen im Boden können ausreichend sein. Während Abweichungen in der Beschaffenheit bei anderen Methoden zu Fehlern führen können, können sie bei magnetischer Messungen sogar die Genauigkeit erhöhen. Da Änderungen in der Beschaffenheit zu einer weiteren ortsfesten Anomalie im Magnetfeld führen, die bei der Überfahrt erfasst werden kann, führt dies zu einer genaueren Bestimmung der Phasenverschiebung und damit der Geschwindigkeit. Daher ist der Einsatz sowohl für schienengeführte als auch frei fahrende Fahrzeuge möglich.

Zusätzlich bietet die Vorrichtung die Möglichkeit einer magnetischen Analyse der Strecke. Dadurch können bekannte magnetische Profile (z.B. von Induktionsschleifen, Brücken, Tunneln, Weichen oder anderen Gleisanlagen) passiv erkannt und diese Information von einem Kontroll- oder Leitsystem ausgewertet werden. Dazu wird ein lernfähiger Algorithmus zur Mustererkennung eingesetzt, der aus den Messungen bekannte Profile erkennt. Insoweit kann diese Vorrichtung z.B. bei Zügen ergänzend zu Systemen wie der Eurobalise bzw. der Linienzugbeeinflussung eingesetzt werden, um Informationen an den Zug weiterzuleiten, ohne jedoch zwangsweise die Installation weiterer Baken oder Empfänger zu erfordern. Dies ist insbesondere bei grenzüberschreitendem oder internationalem Einsatz von Vorteil. Während Balisen auf Funkkommunikation basieren und potenziell Schäden durch Diebstahl, Vandalismus und Wetter ausgesetzt sind, können mit dem hier beschriebenen System einfache Magnete als Marker eingesetzt werden, die z.B. in einer Straße, Schwelle oder im Gleisbett versenkt werden können.

Durch den Einsatz lernfähiger Software können zusätzlich im Betrieb Streckenprofile gelernt werden, was es ermöglicht bei Abweichungen, die z.B. auf Schäden an der Strecke oder an Baukörpern hinweisen können, automatisch Betriebspersonal zu informieren. Bei Montage in der Nähe von magnetischer Betriebstechnik (z.B. Motoren, Spannungswandler) am Fahrzeug ist potentiell auch die Überwachung der Fahrzeugsysteme möglich. Damit kombiniert die hier vorgestellte Vorrichtung mehrere sonst eigenständige Systeme in einem, was deutliche technische und wirtschaftliche Vorteile bringt. Dies macht den Einsatz auch in autonom oder halbautonom agierenden Fahrzeugen interessant. Besonders für solche Fahrzeuge kann die Erfindung auch mit einem künstlich angelegten externen Magnetfeld verwendet werden, um zusätzlich die Orientierung im Raum und den Abstand zum Sender anhand dieses Felds zu bestimmen. Dies kann z.B. mithilfe der räumlichen Ausrichtung des Magnetfeldvektors oder einer Minimum Varianz Analyse realisiert werden.

Die vorgestellte Vorrichtung muss nicht wie andere Systeme z.B. direkt an Laufrollen installiert werden, sondern kann weitgehend frei am Fahrzeug positioniert werden. Anders als optische Sensoren oder Radarsensoren können Magnetometer vollkommen gekapselt und damit vor Umwelteinflüssen und Beschädigung geschützt werden. Dies hat erhebliche wirtschaftliche und technische Vorteile und macht das System auch im Rahmen von Nachrüstungen interessant. Anders als bei Radaranlagen, die sich gegenseitig stören können, sind problemlos mehrere magnetische Sensoren, selbst in unmittelbarer Nähe, einsetzbar und können so Redundanz gewährleisten. Auch die Funktionsprüfung und das Kalibrieren des Systems ist einfach möglich. Durch das Anbringen von einfachen und billigen Spulensystemen in der Nähe der Sensoren kann in Kombination mit einem Computersystem ein beliebiges magnetisches Profil angelegt und zum Test verwendet werden, ohne das Fahrzeug bewegen zu müssen. Dagegen müssen sich die Laufrollen bzw. Räder bei Rad-Umdrehungssensoren drehen oder es ist eine Bewegung des Untergrunds bei Radarsensoren (zum Erzeugen der Dopplerverschiebung) nötig. Dies bedarf komplexer Teststände und ist nicht ohne weiteres im Betrieb möglich.

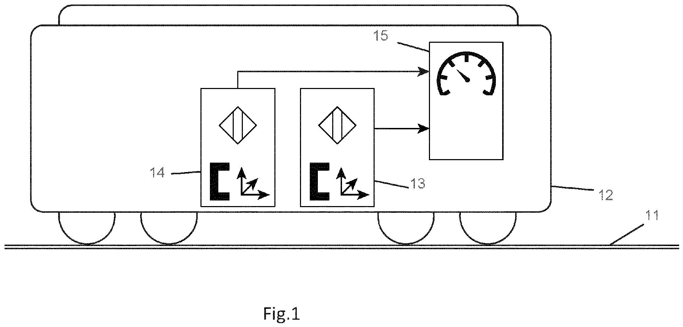

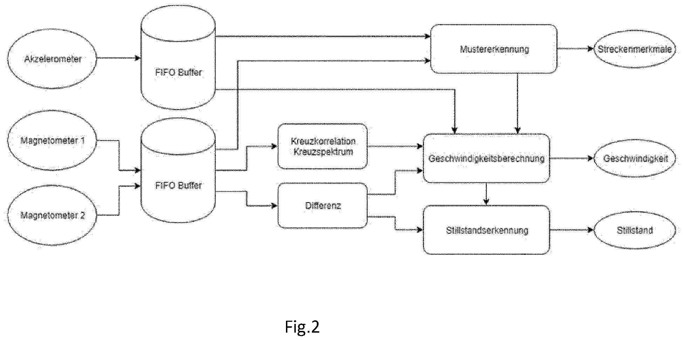

Eine mögliche Anwendung einer solchen Vorrichtung ist die Messung der Geschwindigkeit eines Triebwagens oder Wagons im Bahnverkehr. Ein solches System ist beispielhaft in Figur 1 dargestellt. Zwei Magnetometer 13, 14 sind dazu an einem Fahrzeug 12, nämlich dem Triebwagen montiert, um die Geschwindigkeit über Grund 11 zu bestimmen. Die Datenauswertung findet dabei in einer zentralen Datenverarbeitungseinheit 15 statt. Der Ablauf der beschriebenen Signalverarbeitung ist zur Veranschaulichung beispielhaft für dieses System in Figur 2 dargestellt.

Dazu werden die beiden Magnetometer 13 und 14 in einem Abstand von 30 cm hintereinander parallel zur Schiene mittig unter dem Triebwagen oder Wagon montiert. Zusätzlich kommt eine zentrale Datenauswerteinheit 15 mit integriertem Akzelerometer zum Einsatz. Um Geschwindigkeiten bis ca. 600 km/h zuverlässig auflösen zu können, wird eine Abtastrate von 2.2 kHz gewählt. Dadurch wird gewährleistet, dass mindestens eine zeitliche Verschiebung von vier Messwerten zwischen den beiden Messreihen liegt. Zur Abschätzung der Abtastrate wird der Sensorabstand durch die maximale Geschwindigkeit dividiert, dadurch erhält man die minimale zeitliche Verschiebung der Messungen: 30 cm / 600 km/h = 1.8 ms. Zur Gewährleistung des Nyquist-Kriteriums mit ausreichender Sicherheit wird die Abtastrate um den Faktor vier größer gewählt: 1/(1,8 ms / 4) ≈ 2.2 kHz. Durch den Abstand von nur 30 cm zwischen den Sensoren ist auch bei sehr geringer Bewegung eine Bestimmung der Geschwindigkeit möglich. Ein größerer Abstand (z.B. im Bereich von einigen Metern) ist zwar besser geeignet für höhere Geschwindigkeiten, kann bei geringer Bewegung aber dazu führen, dass in einem gegebenen Zeitintervall beide Sensoren nie dasselbe Bodenprofil messen. Ein Vergleich der Messreihen würde daher kein sinnvolles Ergebnis liefern. Die Länge des Messintervalls bestimmt dabei die Größe der in Figur 2 gezeigten FIFO Buffer und die maximale Rate der Aktualisierung der Ergebnisse, die über ca. 0.2 Hz (ein Geschwindigkeitswert alle fünf Sekunden) liegen sollte um reichlich Information für moderne Leitsysteme bereitzustellen. Im Regelbetrieb ist die Geschwindigkeit von Zügen deutlich niedriger als 600 km/h. Daher bietet die beschriebene beispielhafte Wahl von Sensorabstand und Abtastrate einen guten Kompromiss zwischen der zuverlässigen Bestimmung der Geschwindigkeit unter allen Betriebsbedingungen und stellt gleichzeitig vertretbare Ansprüche an die Hardware (Buffer-Speicher, Prozessorleistung, Stromverbrauch etc.) um die Wirtschaftlichkeit zu gewährleisten. Ein Algorithmus zur Mustererkennung ist zusätzlich integriert, um Barken, Brücken, Weichen und ähnliches zu erkennen. Da es dafür nötig ist, auf größere Datenintervalle zuzugreifen, wird ein eigener Speicher verwendet. In Verbindung mit dem Akzelerometer ist es auch möglich ein Schwanken des Zugs zu detektieren.

### Bezugszeichenliste

- 11: Grund
- 12: Fahrzeug
- 13: Magnetometer
- 14: Magnetometer
- 15: Datenverarbeitungseinheit

## Patentansprüche

1. Vorrichtung zur kontaktlosen Bestimmung einer Geschwindigkeit eines schienengeführten Fahrzeugs (12), die
(a) mindestens zwei zueinander mit bekannter Geometrie beabstandet am Fahrzeug (12) anordenbare Magnetometer (13, 14) aufweist,
(b) wobei die Vorrichtung zur Bestimmung der Geschwindigkeit auf Basis eines Vergleichs der zeitlichen Verschiebung, d.h. einer Phasenverschiebung, von magnetischen Profilen und der bekannten Geometrie der mindestens zwei Magnetometer (13, 14) ausgebildet ist,
(c) wobei die mindestens zwei Magnetometer (13, 14) so eingerichtet sind, dass das Magnetfeld des Untergrunds von den mindestens zwei Magnetometern (13, 14) unabhängig vermessbar ist, **dadurch gekennzeichnet, dass**
(d) die Vorrichtung ausgebildet ist zum Unterscheiden eines In-Phase-Anteils und eines Außer-Phase-Anteils zwischen den Signalen der Magnetometer (13, 14) und zum Berechnen der Geschwindigkeit nur aus dem Außer-Phase-Anteil.

2. Vorrichtung nach Anspruch 1, **dadurch gekennzeichnet, dass** die Vorrichtung ausgebildet ist, das Unterscheiden des In-Phase-Anteils und des Außer-Phase-Anteils durch Berechnung des Kreuzspektrums zwischen den Signalen der Magnetometer (13, 14) durchzuführen.

3. Vorrichtung nach einem der vorstehenden Ansprüche, **dadurch gekennzeichnet, dass** die mindestens 2 Magnetometer (13, 14) in einem Abstand zwischen 1 cm und 80 cm, bevorzugter Weise zwischen 10 cm und 50 cm, sowie besonders bevorzugter Weise zwischen 20 cm und 40 cm, am Fahrzeug (12) anordenbar sind.

4. Vorrichtung nach Anspruch 1 oder 2, **dadurch gekennzeichnet, dass** die Vorrichtung ferner zusätzlich Beschleunigungssensoren zur Anpassung einer Auswertung einer Magnetfeldmessung an ein Fahrprofil aufweist.

5. Vorrichtung nach einem der vorherigen Ansprüche, **dadurch gekennzeichnet, dass** die Vorrichtung ferner zur Bestimmung der Geschwindigkeit zusätzlich Mittel zur Erfassung odometrischer Messwerte aufweist.

6. Vorrichtung nach einem der vorherigen Ansprüche, **dadurch gekennzeichnet, dass** die Vorrichtung ferner zur Bestimmung der Geschwindigkeit Mittel zur Erfassung eines Schlupfes von Rädern des Fahrzeugs (12) aufweist.

7. Vorrichtung nach einem der vorherigen Ansprüche, **dadurch gekennzeichnet, dass** die Vorrichtung zur Ermittlung einer Neigung des Fahrzeugs ausgebildet ist.

8. Vorrichtung nach einem der vorherigen Ansprüche, **dadurch gekennzeichnet, dass** die Vorrichtung ferner dazu ausgebildet ist, mittels der Magnetometer (13, 14) eine Orientierung des Fahrzeugs (12) auf Basis eines externen anlegbaren Felds zu bestimmen.

9. Vorrichtung nach einem der vorherigen Ansprüche, **dadurch gekennzeichnet, dass** die Vorrichtung ferner dazu ausgebildet ist, mittels der Magnetometer (13, 14) Streckenmarker und/oder Kommunikationssignale zu detektieren, die dem Fahrzeug (12) berührungslos weitere Informationen bereitstellen.

10. Vorrichtung nach einem der vorherigen Ansprüche, **dadurch gekennzeichnet, dass** die Vorrichtung ferner dazu ausgebildet ist, mittels der Magnetometer (13, 14) für einen Betrieb und/oder die Bestimmung der Geschwindigkeit relevante magnetische Veränderungen in einem Unterbau, insbesondere einer Straße oder Schiene, während einer Fahrt des Fahrzeugs (12) zu erkennen und/oder zu melden.

11. Vorrichtung nach einem der vorherigen Ansprüche, **dadurch gekennzeichnet, dass** die Vorrichtung ferner dazu ausgebildet ist, mittels der Magnetometer (13, 14) für einen Betrieb und/oder die Bestimmung der Geschwindigkeit relevante Status Informationen aus einer magnetischen Signatur der zum Betrieb des Fahrzeugs (12) verwendeten Anlagen zu gewinnen.

12. Vorrichtung nach einem der vorherigen Ansprüche, **dadurch gekennzeichnet, dass** die Vorrichtung ferner ein Speichermittel zur Abspeicherung von gesammelten Daten aufweist, wobei die Vorrichtung derart ausgebildet ist, basierend auf den gesammelten Daten Strecken- und/oder Umgebungsprofile anzulegen und zur späteren Auswertung bereitzustellen.

13. Fahrzeug (12) mit einer Vorrichtung gemäß einem der vorherigen Ansprüche.

14. Verfahren zur kontaktlosen Bestimmung einer Geschwindigkeit eines schienengeführten Fahrzeugs (12) mittels einer Vorrichtung gemäß einem der vorherigen Ansprüche.

## Claims

1. A device for contactless determination of a speed of a rail-guided vehicle (12), which
(a) comprises at least two magnetometers (13, 14) that can be arranged on the vehicle (12) at a distance from one another with a known geometry,
(b) wherein the device is designed to determine the speed on the basis of a comparison of the temporal shift, i.e. a phase shift, of magnetic profiles and the known geometry of the at least two magnetometers (13, 14),
(c) wherein the at least two magnetometers (13, 14) are configured such that the magnetic field of the substrate can be measured independently by the at least two magnetometers (13, 14),
**characterised in that**
(d) the device is designed to distinguish an in-phase component and an out-of-phase component between the signals of the magnetometers (13, 14) and to calculate the speed only from the out-of-phase component.

2. The device according to claim 1, **characterised in that** the device is designed to distinguish the in-phase component and the out-phase component by calculating the cross spectrum between the signals of the magnetometers (13, 14).

3. The device according to one of the preceding claims, **characterised in that** the at least two magnetometers (13, 14) can be arranged on the vehicle (12) at a distance of between 1 cm and 80 cm, preferably between 10 cm and 50 cm, and especially preferably between 20 cm and 40 cm.

4. The device according to claim 1 or 2, **characterised in that** the device further comprises acceleration sensors for adapting an analysis of a magnetic field measurement to a driving profile.

5. The device according to one of the preceding claims, **characterised in that** the device further comprises means for detecting odometric measured values for determining the speed.

6. The device according to one of the preceding claims, **characterised in that** the device further comprises means for detecting a slip of wheels of the vehicle (12) for determining the speed.

7. The device according to one of the preceding claims, **characterised in that** the device is designed to determine a tilt of the vehicle.

8. The device according to one of the preceding claims, **characterised in that** the device is further designed to determine an orientation of the vehicle (12) on the basis of an external applicable field by means of the magnetometers (13, 14).

9. The device according to one of the preceding claims, **characterised in that** the device is further designed to detect route markers and/or communication signals by means of the magnetometers (13, 14) that provide further information to the vehicle (12) in a contactless manner.

10. The device according to one of the preceding claims, **characterised in that** the device is further designed to recognise and/or report, while the vehicle (12) is driving and by means of the magnetometers (13, 14), magnetic changes in a substructure, in particular a street or rail, that are relevant to operation and/or the determination of the speed.

11. The device according to one of the preceding claims, **characterised in that** the device is further designed to obtain, by means of the magnetometers (13, 14), status information that is relevant to operation and/or the determination of the speed from a magnetic signature of the systems used to operate the vehicle (12).

12. The device according to one of the preceding claims, **characterised in that** the device further comprises storage means to store collected data, the device being designed to create route and/or environment profiles based on the collected data and to provide said profiles for subsequent analysis.

13. A vehicle (12) with a device according to one of the preceding claims.

14. A method for contactless determination of a speed of a rail-guided vehicle (12) by means of a device according to one of the preceding claims.

## Revendications

1. Dispositif de détermination sans contact d'une vitesse d'un véhicule (12) guidé sur rails, qui
(a) comprend au moins deux magnétomètres (13, 14) susceptibles d'être disposés sur le véhicule (12) à distance l'un de l'autre avec une géométrie connue,
(b) le dispositif étant conçu pour déterminer la vitesse en se basant sur une comparaison du décalage temporel, c'est-à-dire d'un déphasage, de profils magnétiques et de la géométrie connue desdits au moins deux magnétomètres (13, 14),
(c) lesdits au moins deux magnétomètres (13, 14) étant configurés de telle sorte que le champ magnétique du sol peut être mesuré indépendamment par lesdits au moins deux magnétomètres (13, 14),
**caractérisé en ce que**
(d) le dispositif est conçu pour distinguer une composante en phase et une composante hors phase entre les signaux des magnétomètres (13, 14) et pour calculer la vitesse uniquement à partir de la composante hors phase.

2. Dispositif selon la revendication 1, **caractérisé en ce que** le dispositif est conçu pour effectuer la distinction de la composante en phase et de la composante hors phase en calculant le spectre croisé entre les signaux des magnétomètres (13, 14).

3. Dispositif selon l'une des revendications précédentes, **caractérisé en ce que** lesdits au moins deux magnétomètres (13, 14) sont susceptibles d'être disposés sur le véhicule (12) à une distance comprise entre 1 cm et 80 cm, de préférence entre 10 cm et 50 cm, et de manière particulièrement préférée entre 20 cm et 40 cm.

4. Dispositif selon la revendication 1 ou 2, **caractérisé en ce que** le dispositif comporte en outre en supplément des capteurs d'accélération pour adapter une évaluation d'une mesure de champ magnétique à un profil de conduite.

5. Dispositif selon l'une des revendications précédentes, **caractérisé en ce que** pour la détermination de la vitesse, le dispositif comporte en outre en supplément des moyens de saisie de valeurs de mesure odométriques.

6. Dispositif selon l'une des revendications précédentes,
**caractérisé en ce que** pour la détermination de la vitesse, le dispositif comporte en outre des moyens de détection d'un patinage des roues du véhicule (12).

7. Dispositif selon l'une des revendications précédentes, **caractérisé en ce que** le dispositif est conçu pour déterminer une inclinaison du véhicule.

8. Dispositif selon l'une des revendications précédentes, **caractérisé en ce que** le dispositif est en outre conçu pour déterminer, au moyen des magnétomètres (13, 14), une orientation du véhicule (12) sur la base d'un champ externe susceptible d'être appliqué.

9. Dispositif selon l'une des revendications précédentes, **caractérisé en ce que** le dispositif est en outre conçu pour détecter, au moyen des magnétomètres (13, 14), des marqueurs de trajet et/ou des signaux de communication qui fournissent sans contact des informations supplémentaires au véhicule (12).

10. Dispositif selon l'une des revendications précédentes, **caractérisé en ce que** le dispositif est en outre conçu pour reconnaître et/ou signaler, au moyen des magnétomètres (13, 14), des modifications magnétiques pertinentes pour un fonctionnement et/ou pour la détermination de la vitesse, dans une infrastructure, en particulier une route ou un rail, pendant un déplacement du véhicule (12).

11. Dispositif selon l'une des revendications précédentes, **caractérisé en ce que** le dispositif est en outre conçu pour obtenir, au moyen des magnétomètres (13, 14), des informations d'état, pertinentes pour un fonctionnement et/ou pour la détermination de la vitesse, à partir d'une signature magnétique des installations utilisées pour le fonctionnement du véhicule (12).

12. Dispositif selon l'une des revendications précédentes, **caractérisé en ce que** le dispositif comporte en outre un moyen de stockage pour stocker des données collectées, le dispositif étant conçu de manière à créer des profils de trajet et/ou d'environnement sur la base des données collectées et à les mettre à disposition pour une évaluation ultérieure.

13. Véhicule (12) comprenant un dispositif selon l'une des revendications précédentes.

14. Procédé de détermination sans contact d'une vitesse d'un véhicule (12) guidé sur rails au moyen d'un dispositif selon l'une des revendications précédentes.
